(19) Europäisches Patentamt
European Patent Office
Office européen des brevets

(11) **EP 3 480 581 A1**

(12) **EUROPEAN PATENT APPLICATION**

(43) Date of publication:
08.05.2019 Bulletin 2019/19

(21) Application number: 18203353.0

(22) Date of filing: 30.10.2018

(51) Int Cl.:
*G01N 15/14* (2006.01)          *B01L 3/00* (2006.01)
*G01N 15/02* (2006.01)          *G01N 15/10* (2006.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 02.11.2017 JP 2017213140

(71) Applicant: SYSMEX CORPORATION
Kobe-shi
Hyogo 651-0073 (JP)

(72) Inventors:
• Shirai, Kentaro
  Hyogo, 651-0073 (JP)
• Takahashi, Yusuke
  Hyogo, 651-0073 (JP)
• Yanagida, Masatoshi
  Hyogo, 651-0073 (JP)
• Iwanaga, Shigeki
  Hyogo, 651-0073 (JP)
• Yoshida, Tomokazu
  Hyogo, 651-0073 (JP)
• Ijiri, Yuichi
  Hyogo, 651-0073 (JP)

(74) Representative: Hoffmann Eitle
Patent- und Rechtsanwälte PartmbB
Arabellastraße 30
81925 München (DE)

(54) **CELL DETECTION METHOD AND CELL DETECTION SYSTEM**

(57) A cell detection method and a cell detection system capable of performing target cell detection satisfactorily without interference and reducing the time required for detection of target cells are provided.

The cell detection method includes a separation step of step S1 to obtain a sample containing target cells by removing at least a part of the non-target cells from a biological sample including target cells and non-target cells based on a difference in forces acting on target cells and non-target cells; a concentration step of step S3 of obtaining a measurement sample having a target cell concentration increased from the sample containing target cells; a detection of step S4 of detecting target cells by subjecting the measurement sample to an imaging flow cytometer.

FIG. 1

**Description**

FIELD OF THE INVENTION

The present invention relates to a cell detection method and cell detection system.

BACKGROUND

Various rare cells such as circulating tumor cells (CTC) in blood, vascular endothelial cells, hematopoietic stem cells in bone marrow fluid, fetal erythroblasts contained in the blood of pregnant women and the like, are known to have relevance to various diseases. In particular, CTC leaked into the blood from a tumor has been reported to be useful as a factor of cancer diagnosis, and it is anticipated as a noninvasive cancer examination. However, it is extremely difficult to measure rare cells in bodily fluids, for example, since the abundance of CTC in blood is several to several tens per 10 mL.

A CellSearch system (manufactured by Veridex) is known ("CELLSEARCH System Overview |CELLSEARCH", (online, Search on October 26, 2017, Web site URL: https://www.cellsearchctc.com/product-systems-overview/cellsearch-system-overview)) as a method of measuring CTC, which is one type of rare cell. Non Patent Literature 1 describes a method of recovering and measuring CTC using magnetic particles in which an anti-EpCAM antibody is immobilized and targets a cell adhesion factor (EpCAM) expressed in cancer cells. According to the method of "CELLSEARCH System Overview | CELLSEARCH", (online, Search on October 26, 2017, Web site URL: https://www.cellsearchctc.com/product-systems-overview/cellsearch-system-overview), CTC is detected by distinguishing captured cells from leukocytes by fluorescence microscopy based on the expression levels of cytokeratin and CD45.

A method using an imaging flow cytometer also is known (U.S. Patent No. 8,885,913) as a method of measuring CTC. U.S. Patent No. 8,885,913 describes a method of distinguishing leukocytes from CTC by morphological characteristics and optical characteristics of cells by an imaging flow cytometer equipped with a TDI (Time Delay Integration) camera.

SUMMARY OF THE INVENTION

According to the method described in "CELLSEARCH System Overview | CELLSEARCH", (online, Search on October 26, 2017, Web site URL: https://www.cellsearchctc.com/product-systems-overview/cellsearch-system-overview), since CTC is captured with an anti-EpCAM antibody, it is difficult to recover cancer cells of cancer types that do not show EpCAM expression or cancer cells that have a small expression amount of EpCAM. Since the target cell, CTC, is captured by the antibody, stress is applied to the target cell, and such stress can be an obstacle in detecting the cell after capture. In the method described in U.S. Patent No. 8,885,913, although erythrocytes contained in the blood are removed by a filter, hemolysis, sonic waves and the like, leukocytes and CTCs are measured with an imaging flow cytometer without separation. As mentioned above, while only several to several tens of CTCs are contained in 10 to 10 mL of blood, there are 30 to 90 million leukocytes. There is also a limit to the imaging speed of the imaging flow cytometer. Therefore, it is difficult to complete the measurement in an appropriate time in actual clinical practice.

A first aspect of the present invention relates to a cell detection method. The cell detection method according to this aspect includes a step (S1) of obtaining a target cell-containing sample (22) from a biological cell (21) containing target cells and non-target cells by removing at least part of the non-target cells based on differences in forces acting on target cells and non-target cells, a step (S3) of obtaining a measurement sample (23) having a target cell concentration increased from the target cell-containing sample (22), and a step (S4) of subjecting the measurement sample (23) to an imaging flow cytometer (13) to detect the target cells (23).

According to the cell detection method of this aspect, at least a part of the non-target cells of the biological sample is removed based on the difference in the forces acting on the target cells and the non-target cells, respectively. In this way no stress is applied to the target cells, and detection of the target cells can be carried out satisfactorily without interference. Since the measurement sample derived from the concentrated target cell-containing sample is supplied to the imaging flow cytometer, it also is possible to properly detect the target cells with a small volume measurement sample. Hence, the time required for detection of target cells can be reduced.

In the cell detection method according to this aspect, the difference in the forces acting on the target cells and the non-target cells, respectively, is caused by the difference in the morphology of the target cells and the non-target cells. In this case, the morphology can be the cell size.

In the cell detection method according to this aspect, in the step (S1) of obtaining a sample containing target cells, the target cells and the non-target cells are separated without staining the target cells. When the target cells are stained before the step of obtaining the target cell-containing sample, the cells become smaller due to the staining treatment. Therefore, when target cells and non-target cells are separated without staining the target cells, separation can be appropriately performed based on the difference in forces acting on the target cells and the non-target cells, respectively.

In the cell detection method according to this aspect, the target cells may be stained before the step (S1) of obtaining the target cell-containing sample. By doing so, for example, it is possible to collectively perform the washing performed in the step of staining the target cells and the washing performed in the step of obtaining the sample containing the target cells. In this way the time required for detection of target cells can be reduced.

In the cell detection method according to this aspect, the target cells may be stained before the step (S1) of obtaining the target cell-containing sample and after the step (S1) of obtaining the target cell-containing sample.

In the cell detection method according to this aspect, in the step (S1) of obtaining the target cell-containing sample (22), the target cells and the non-target cells are separated by flowing the biological sample (21) into a microchannel (110). By doing so, the configuration for separating the target cell and the non-target cell can be miniaturized.

In the cell detection method according to this aspect, the target cells and the non-target cells are separated by flowing the biological sample (21) through the microchannel (110) having a curved part (111) in the step (S1) of obtaining the target cell-containing sample (22). By doing so, target cells and non-target cells can be effectively separated with a simple structure.

In the cell detection method according to this aspect, the target cells and non-target cells are separated based on the rate distribution occurring in the microchannel (110) through which the biological sample (21) flows in the step (S1) of obtaining the target cell-containing sample (22). By doing so, it is possible to separate the target cells and the non-target cells simply by flowing the biological sample through the channel.

In the cell detection method according to this aspect, the target cell-containing sample (22) is concentrated in step (S3) of obtaining the measurement sample (23). By doing so, detection by the imaging flow cytometer can be performed properly and efficiently.

In this case, the concentration of the cells contained in the measurement sample (23) is set to $4.5 \times 10^9$ cells/mL or less.

In the cell detection method according to this aspect, the target cell-containing sample is concentrated so that the measurement sample (23) has a predetermined volume in step (S3) of obtaining the measurement sample (23).

In this case, the predetermined volume is a volume defined by the measurement time of the measurement sample (23) in the step (S4) of detecting the target cells. The predetermined volume also is a volume equal to or less than a value obtained by multiplying the maximum object moving speed, the maximum depth of field, the maximum imaging area width, and the measuring time of the imaging flow cytometer (13). In this way detection can be completed within a predetermined measurement time.

In the cell detection method according to this aspect, the sample containing the target cells (22) is centrifuged and the supernatant is removed to concentrate the target cell-containing sample in step (S3) of obtaining the measurement sample (23).

The cell detection method according to this aspect also includes a step (S2) of staining at least the target cells for imaging in the imaging flow cytometer (13).

In this case, step (S2) of staining the target cells is performed after the step (S1) of obtaining the target cell-containing sample (22). In this way the amount of staining reagent used can be reduced.

In step (S2) of staining the target cells, at least one of a gene and a protein is stained.

In step (S2) of staining the target cells, at least one of the nucleus and cytoplasm is stained.

In step (S2) of staining the target cells, the target cells also are labeled with a fluorescent stain.

In the cell detection method according to this aspect, Substantially all of the measurement sample (23) obtained in the step (S3) of obtaining the measurement sample (23) is subjected to the imaging flow cytometer (13) for measurement in step (S4) of detecting the target cells. In this way it is possible to detect few target cells with almost no surplus.

In the cell detection method according to this aspect, the biological sample (21) may be a blood sample.

In the cell detection method according to this aspect, the target cell may be a rare cell circulating in the blood. Examples of rare cells circulating in the blood include blood circulating cancer cells (CTC), vascular endothelial cells (CEC), hematopoietic stem cells (HSC) and the like.

In the cell detection method according to this aspect, the non-target cells may be red blood cells.

In this case, at least some cells of the non-target cells are removed after erythrocytes are lysed and removed in step (S1) of obtaining the target cell-containing sample (22). The blood sample contains many red blood cells which are non-target cells. Non-target cells can be smoothly removed when erythrocytes are lysed and removed in advance before removal of non-target cells.

In the cell detection method according to this aspect, the non-target cells may be platelets.

In the cell detection method according to this aspect, the non-target cells may be white blood cells.

In the cell detection method according to this aspect, the target cells may be abnormal lymphocytes, and the non-target cells may be other leukocytes.

In the cell detection method according to this aspect, the imaging flow cytometer (13) includes a TDI camera (354) for imaging cells. In this way it is possible to improve the quality of the captured image of the cell.

In the cell detection method according to this aspect, containers (T1, T2, T3) for containing a biological sample (21), a target cell-containing sample (22), and a measurement sample (23) are treated with a blocking agent. In this way it is possible to suppress target cells from adhering to the inner wall of the container, as well as target cells not used for detection. Therefore, it is possible to reliably detect few target cells contained in the biological sample, the target cell-containing sample, and the measurement sample.

A second aspect of the present invention relates to a cell detection method. The cell detection method according to this aspect includes a step (S1) of obtaining a target cell-containing sample by removing at least a part of the non-target cells from the biological sample (21) containing the target cells and the non-target cells without staining the target cells, a step (S3) of obtaining a measurement sample (23) which has a target cell concentration increased from that of the target cell-containing sample (22), and a step (S4) of subjecting the measurement sample (23) to an imaging flow cytometer (13) to detect target cells.

According to the cell detection method of this aspect, the same effects as those of the cell detection method according to the first aspect are achieved. According to the cell detection method of this aspect, since separation of target cells and non-target cells is performed without staining the target cells, performing the separation process in a state in which cells are reduced by staining can be avoided. Therefore, it is possible to perform separation properly.

A third aspect of the present invention relates to a cell detection system. The cell detection system (10) according to this aspect is provided with a separation unit (100) for obtaining a target cell-containing sample (22) by removing at least a part of the cells of non-target cells to from a biological sample (21) containing target and non-target cells based on differences in forces acting on target and non-target cells, a concentration unit (205) for obtaining a measurement sample (23) in which the target cell concentration has been increased from that of the target cell-containing sample (22), an imaging unit (354) for imaging the target cells contained in the measurement sample (23) flowing through the flow cell (310), and a detection unit (301) for detecting target cells based on the captured image acquired by the imaging unit (354).

According to the cell detection system of this aspect, the same effects as those of the first aspect are achieved.

According to the present invention, detection of a target cell can be carried out satisfactorily without interference and the time required for detection of target cells can be reduced.

BRIEF DESCRIPTION OF THE DRAWINGS

FIG. 1 is a flow chart showing steps of a cell detection method according to an embodiment;
FIG. 2 is a schematic view describing a separation step according to the embodiment;
FIG. 3A is a schematic diagram showing a configuration of a separation unit according to the embodiment; FIG. 3B is a schematic diagram showing a cross section of the microchannel according to the embodiment;
FIG. 4A is a schematic diagram showing an end part on the output end side of the microchannel according to the embodiment; FIG. 4B is a graph showing the relationship between the diameter of white blood cells and cancer cells and the number of cells according to the embodiment;
FIG. 5 is a schematic diagram describing a staining and concentration step according to the embodiment;
FIG. 6 is a schematic diagram describing a staining and concentration step according to the embodiment;
FIG. 7 is a schematic diagram describing a detection step according to the embodiment;
FIG. 8 is a schematic diagram showing a configuration of a cell detection system according to an embodiment;
FIG. 9 is a schematic diagram showing a configuration of a separation device according to an embodiment;
FIG. 10 is a schematic diagram showing a configuration of a staining and concentration device according to an embodiment;
FIG. 11 is a schematic diagram showing a configuration of an imaging flow cytometer according to an embodiment; and
FIG. 12A and FIG. 12B are flowcharts showing the steps of a cell detection method according to a modified example.

DESCRIPTION OF THE EMBODIMENTS OF THE INVENTION

In the following embodiments, the present invention is applied to a method of detecting target cells from a biological sample containing target cells and non-target cells. In the following embodiments, the biological sample is blood. The biological sample is not limited to blood, and may be a body fluid sample, for example, urine, bone marrow fluid or the like may be used. The target cells are regarded as rare cells circulating in the blood. In the following embodiments, the target cells are blood circulating cancer cells (CTC), and the non-target cells are erythrocytes, leukocytes, and platelets. Target cells are not limited to CTC, and cancer cells other than CTC, vascular endothelial cells (CEC), hematopoietic stem cells (HSC) and the like also may be used. The target cells also may be abnormal lymphocytes. When the target cells are abnormal lymphocytes, non-target cells are regarded as other leukocytes.

Cell Detection Method

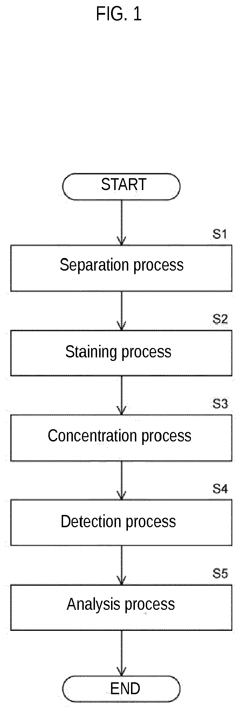

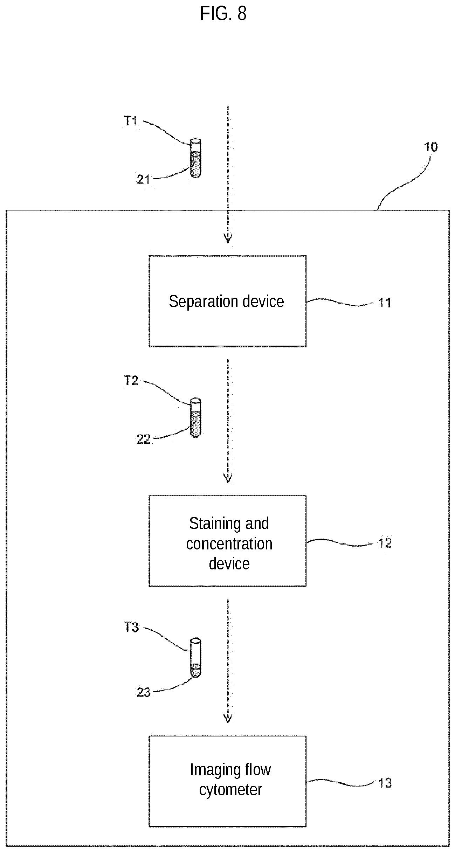

As shown in FIG. 1, the cell detection method of the embodiment includes the steps S1 to S5. Hereinafter, a case will be described in which the operator inputs an instruction to the cell detection system and the cell detection system executes the detection method including steps S1 to S5 in FIG. 1 according to the input. The cell detection system will be described later with reference to FIG. 8 and subsequent figures.

In the separation step of step S1, the cell detection system obtains a sample containing target cells by removing at least a part of the non-target cells from the biological sample including target cells and non-target cells based on the difference in force acting on the target cells and the non-target cells. Differences in force acting on target cells and non-target cells, respectively, are caused by differences in morphology of target cells and non-target cells. The cell morphology in this case refers to morphological characteristics, such as cell size, weight, specific gravity and the like. The size of a cell is, for example, the diameter or radius of the cell, the area in a plan view, the circumferential length and the like.

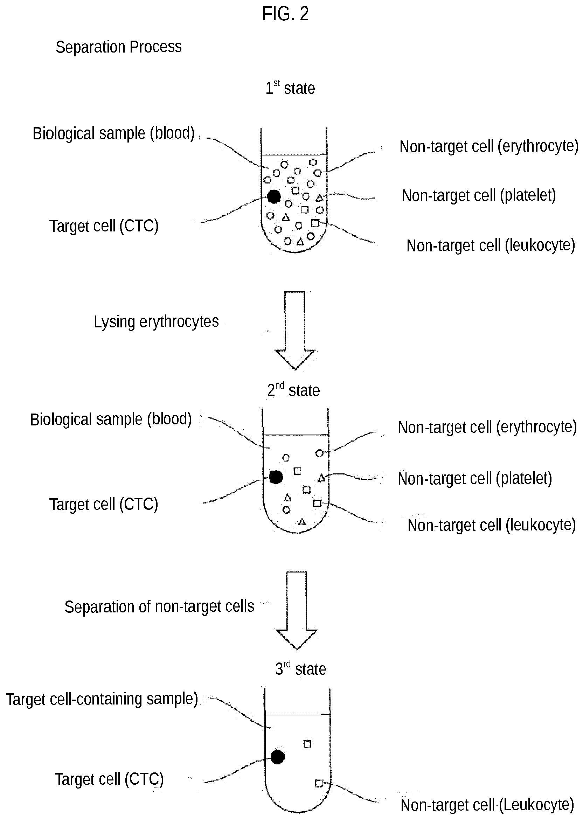

Referring to FIG. 2, the separation step of step S1 will be described. As shown in the first state, the biological sample of the embodiment is blood. The blood is, for example, whole blood. Blood contains the target cells CTC and non-target cells such as erythrocytes, platelets, and leukocytes. In FIG. 2, CTC is indicated by black circles, erythrocytes are indicated by circles, platelets are indicated by triangles, leukocytes are indicated by squares.

In step S1, the cell detection system lyses erythrocytes in the first state biological sample, then centrifuges and removes the supernatant. In this way erythrocytes almost disappear from the biological sample of the first state, as shown in the second state. In step S1, the cell detection system also separates the target cells and the non-target cells in the biological sample of the second state. Specifically, the cell detection system separates and removes a part of the erythrocytes, platelets, and leukocytes from the biological sample of the second state based on the difference in force acting on CTC, red blood cells, platelets, and leukocytes, respectively. In the embodiment, separation is performed utilizing the fact that the difference in force acting on the cells is caused by the difference in diameter of the cells. In this way a part of the non-target cells is removed from the sample in the second state, and a target cell-containing sample as shown in the third state is obtained .

As described above, when the non-target cells are removed after erythrocytes are lysed and removed in the first state blood, a state in which a large number of erythrocytes contained in the blood are removed in advance is achieved when the non-target cells are removed. In this way it non-target cells can be smoothly removed in the removal of non-target cells.

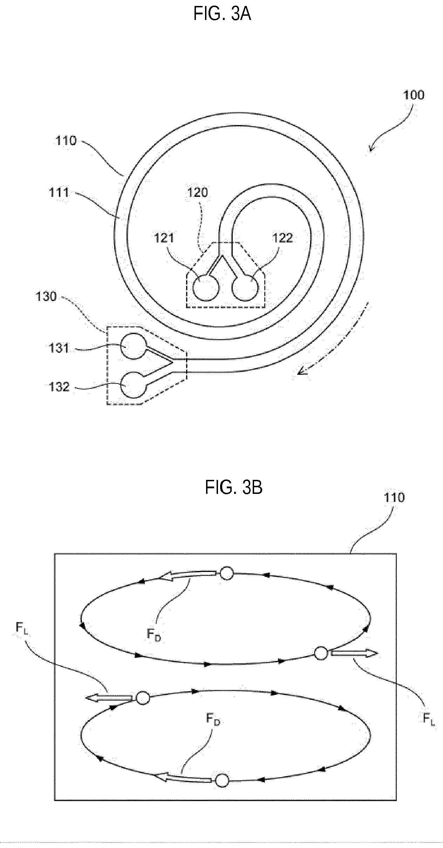

When the non-target cells are removed from the biological sample in the second state of FIG. 2, for example, the separation unit 100 shown in FIG. 3A is used.

As shown in FIG. 3A, the separation unit 100 includes a microchannel 110, an input end part 120, and an output end part 130. The microchannel generally means a flow path having a depth and a width in the range of 10 $\mu$m to 1000 $\mu$m. The separation unit 100 is configured, for example, by superimposing another plate-like member on a thin plate-shaped member having grooves corresponding to the microchannel 110, the input end part 120, and the output end part 130. The separation of the non-target cells of the embodiment is based on a separation principle called Dean Flow Fractionation.

The microchannel 110 has a curved part 111 having a spiral shape. The input end part 120 is provided at the center side end part of the spiral shape of the microchannel 110 and the output end part 130 is provided at the end part on the side opposite to the input end part 120 of the microchannel 110. The input end part 120 includes inlets 121 and 122. The inlets 121 and 122 are configured by holes provided in the members configuring the separation unit 100. The inlet 121 is connected to the microchannel 110 on the outer peripheral side of the spiral shape. The inlet 122 is connected to the microchannel 110 on the inner peripheral side of the spiral shape. The output end part 130 includes outlets 131 and 132. The outlets 131 and 132 are constituted by holes provided in the members configuring the separation unit 100. The outlet 131 is connected to the microchannel 110 on the inner peripheral side of the spiral shape. The outlet 132 is connected to the microchannel 110 on the outer peripheral side of the spiral shape.

When removing non-target cells, the biological sample in the second state shown in FIG. 2 is injected into the inlet 121, and a sheath liquid is injected into the inlet 122. Then, a positive pressure is applied to the inlets 121 and 122 by a pump connected to the inlets 121 and 122 via a tube. In this way the sample injected into the inlet 121 and the sheath liquid injected into the inlet 122 flow through the microchannel 110 toward the output end. A container for accommodating the target cell-containing sample is connected to the outlet 131 via a tube, and a container for collecting the liquid containing the separated non-target cells is connected to the outlet 132 via a tube.

When the biological sample in the second state is caused to flow through the microchannel 110, as shown in FIG. 3B, a force changing the position of the cell flowing in a direction orthogonal to the direction of the flow channel is generated in the microchannel 110. Specifically, a dynamic lift force FL and a Dean drag force FD of different magnitudes are generated depending on the cell diameter. Generally, in a microchannel, the flow velocity is distributed so that the velocity at the cross-sectional center of the flow channel is large and the velocity near the wall is small. Due to the above flow velocity distribution, a secondary flow called Dean vortex is generated in the spiral microchannel 110, as shown by an elliptical arrow in FIG. 3B. Dean drag force FD and dynamic lift force FL can be expressed by the following equations (11) and (12).

Equation 1

$$F_D = 3\pi\mu \overline{U}_{Dean} a_p \qquad \ldots (11)$$

$$F_L = \rho G^2 C_L a_p^4 \qquad \ldots (12)$$

Where $\mu$ : viscosity of fluid, $\rho$ : Density of fluid, $\overline{U}_{Dean}$ : Dean velocity $G$ : shear rate, $a_p$ : particle size/diameter, $C_L$ : dynamic lift coefficient

$$G = U_{max}/D_h$$

$U_{max}$ : maximum flow velocity of microchannel, $D_h$ : hydraulic diameter

As the cells in the biological sample are swept along the microchannel 110, they are distributed in accordance with the value of the diameter in the microchannel 110 by the dynamic lift force FL and the Dean drag force FD. As a result, cells are distributed in accordance with the value of the diameter at the end part of the micro flow path 110 on the side of the output end part 130. In this way cells having a diameter equal to or larger than a predetermined diameter are obtained from the outlet 131. The sample obtained from the outlet 131 is the target cell-containing sample of the third state in FIG. 2.

According to the micro flow channel 110 as described above, the target cells and the non-target cells can be separated with a simple configuration, and the configuration for separating the target cells and the non-target cells can be miniaturized. According to the micro flow channel 110, target cells and non-target cells also can be separated based on the velocity distribution occurring in the curved part 111, so that the separation step can be executed merely by flowing the biological sample in the micro flow channel 110.

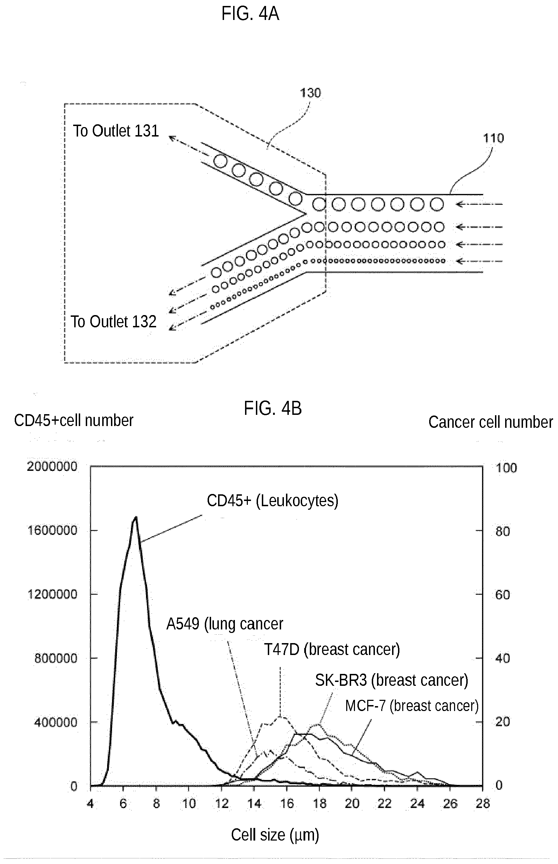

FIG. 4B shows the diameter of the leukocytes and the cancer cells which the inventors investigated in advance. In FIG. 4B, the ordinate on the left side shows the number of leukocytes and the ordinate on the right side shows the number of cancer cells. The cancer cells used for the survey are derived from cell lines that include cancer cells.

As shown in FIG. 4B, most leukocytes have diameters of less than about 10 $\mu$m to 15 $\mu$m, and the majority of cancer cells have diameters of about 10 $\mu$m to 15 $\mu$m or more. Therefore, when removing non-target cells from the second state in FIG. 2, cells having a diameter smaller than the cut-off value are taken out with a value in the vicinity of 10 $\mu$m to 15 $\mu$m as a cutoff value, and cells with a diameter larger than the cutoff value are removed. Table 1 below shows the number of leukocytes above the cutoff value when the cutoff value is changed from 10 $\mu$m to 15 $\mu$ relative to 5 mL of whole blood of a healthy person. Note that the reference value of the leukocyte count of a healthy person is 3500 to 9000 cells/$\mu$L.

Table 1

| Leukocyte count in 5 mL of whole blood of healthy person | | |
|---|---|---|
| Cutoff value ($\mu$m) | Minimum reference value (cells) | Maximum reference value (cells) |
| 15 | 293970 | 755923 |
| 14 | 429575 | 1104622 |
| 13 | 579758 | 1490807 |
| 12 | 846741 | 2177334 |
| 11 | 1410530 | 3627077 |
| 10 | 2413847 | 6207034 |

As shown in Table 1, when the cut-off value is large, the number of leukocytes taken out is reduced, and the possibility of removing cancer cells increases. On the other hand, if the cut-off value is small, the number of leukocytes taken out increases, and the possibility of removing cancer cells decreases. When the cut-off value is small, the number of cells to be subjected to the detection step increases, and there is a possibility that cells can not be detected smoothly in the detection step. Therefore, taking these factors into consideration, the number of cells to be separated is determined by using the microchannel 110. The number of cells separated by the separation unit 100 can be adjusted by the length, the cross-sectional area, the cross-sectional shape, the flow rate of the microchannel 110 and the like of the microchannel 110.

Returning to FIG. 1, in the staining step of step S2, the cell detection system stains labeled cells contained in the target cell-containing sample for imaging in an imaging flow cytometer.

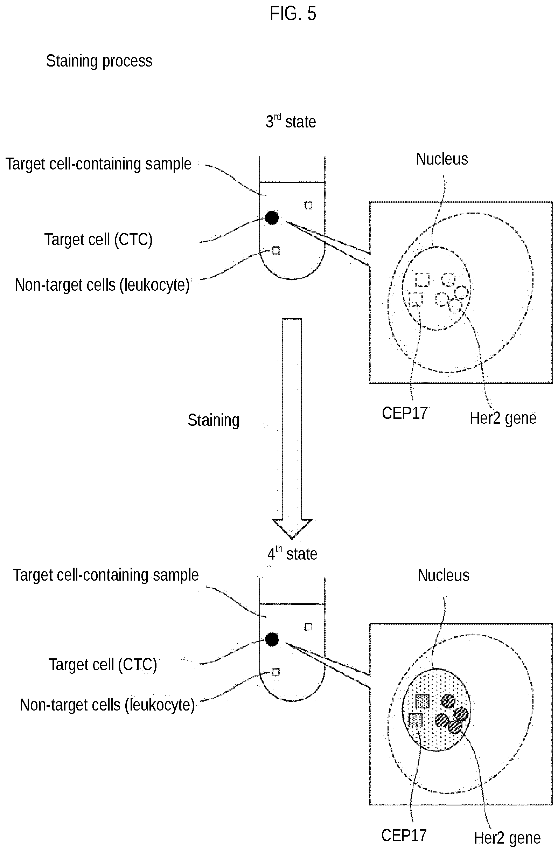

The staining step of step S2 will be described with reference to FIG. 5. In step S2, the cell detection system mixes the reagent for staining with the target cell-containing sample in the third state to stain the target site of the target cells. Specifically, the target site is fluorescently labeled with a fluorescent stain. In an embodiment, the target sites to be stained are the nucleus, the Her2 gene, and the centromere region of chromosome 17 (CEP17). As shown in the upper diagram of FIG. 5, in the third state, none of the nucleus, the Her2 gene, and CEP17 are stained. By performing the staining step of step S2, the nucleus, Her2 gene, and CEP17 are stained with different fluorescent stains as shown in the lower diagram of FIG. In this way the target cell-containing sample shifts from the third state to the fourth state. The staining step of the embodiment is performed after the separation step for obtaining the target cell-containing sample. In this way staining can be performed after excluding unnecessary cells, so that the amount of staining reagent used can be reduced. When the staining step is performed before the separation step, the cells also become smaller due to the staining treatment. However, in the separation step of the embodiment, target cells and non-target cells are separated without staining target cells. This makes it possible to properly separate cells of a predetermined size or more in the separation step.

Note that in the above staining step, the target site to be stained may be a site of the cell. The target site to be stained is not limited to genes and nuclei, and may be surface antigens on cellular proteins, cytoplasm, cell membrane, cell membrane, for example. The staining of the target site is not limited to being performed on the basis of in situ hybridization or specific staining, and may be performed by immunostaining based on antigen-antibody reaction. When the target site is a gene, it is not limited to the Her2 gene and CEP17, and may be another gene region. In embodiments, the staining of a cell means to stain the gene, nucleus, protein, cytoplasm, cell membrane, surface antigen and the like of the cell as described above.

Instead of staining of cellular genes and nuclei in the above staining step, cellular proteins and cytoplasm may be stained. Staining of cellular genes and nuclei, as well as cellular protein and cytoplasmic staining also may be performed. When staining a protein present in the cytoplasm, it is preferable that the cytoplasm is stained. Proteins present in the cytoplasm include PSA present in CTC derived from prostate cancer and cytokeratin present in CTC derived from lung cancer.

Returning to FIG. 1, in the concentration step in step S3, the cell detection system obtains a measurement sample whose target cell concentration has been increased from that of the sample containing target cells.

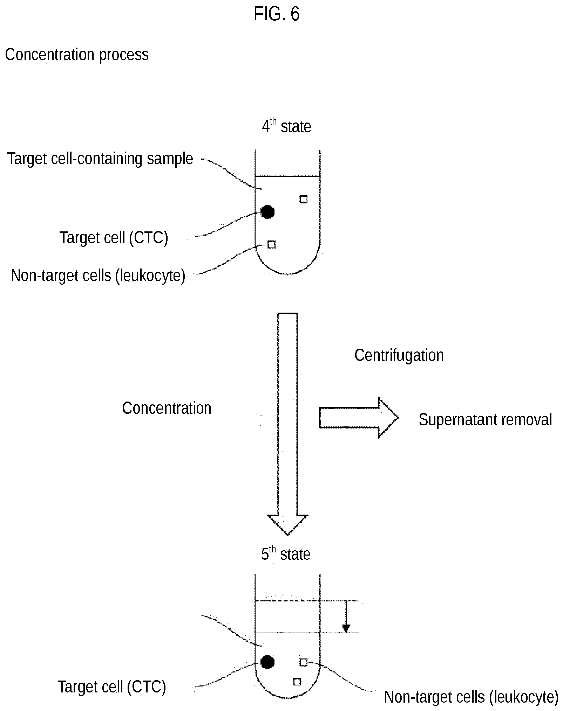

The concentration step in step S3 will be described with reference to FIG. 6. In step S3, the cell detection system performs a treatment such as centrifugation on the target cell-containing sample in the fourth state, and removes the supernatant of the target cell-containing sample after centrifugation. In this way the amount of liquid decreases with the cells contained in the target cell-containing sample in the fourth state remaining, such that the concentration of the target cells increases. Thus, the sample containing the target cell in the fourth state becomes the measurement sample in the fifth state. In the concentration step, the target cell-containing sample is concentrated so that the concentration of the cells contained in the measurement sample becomes a predetermined concentration.

Since the concentration of the cells contained in the measurement sample becomes a predetermined concentration through the concentration step, detection by the imaging flow cytometer can be appropriately and efficiently performed in the detection step of the later stage.

Note that, also in the staining step of step S2, the liquid volume of the sample decreases by processing such as removing the supernatant. In the concentration step of step S3, the concentration of the target cells is increased according to the amount of the measurement sample to be used in the detection step, apart from the decrease in the amount of liquid for staining.

Although a measurement sample having an increased concentration of target cells was obtained by removing supernatant from the target cell-containing sample after the centrifugation in the concentration step, the treatment performed in the concentration step is not limited thereto. For example, by removing the supernatant of the target cell-containing sample, the target cell-containing sample may be concentrated so that the measurement sample has a predetermined volume. All the liquid components also may be removed from the target cell-containing sample after the centrifugation, and a predetermined amount of a suspension may be mixed in the container to obtain a measurement sample.

Returning to FIG. 1, in the detection step of step S4, the cell detection system detects the target cells by subjecting the measurement sample obtained in the concentration step to an imaging flow cytometer.

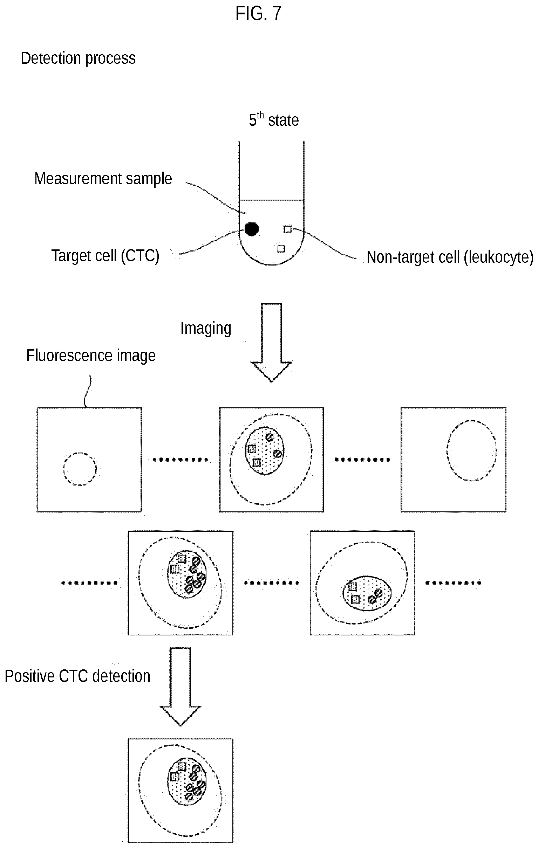

The detection step of step S4 will be described with reference to FIG. 7. In step S4, the cell detection system provides the measurement sample in the fifth state to the imaging flow cytometer, and the fluorescence generated from the cells contained in the measurement sample is imaged by the imaging unit provided in the imaging flow cytometer. In this way a fluorescence image is acquired for each cell included in the measurement sample. The imaging flow cytometer also determines whether to amplify the Her2 gene based on the acquired fluorescence image, and detects positive cells in which the Her2 gene is amplified as CTC.

Returning to FIG. 1, in the analysis step of step S5, the cell detection system analyzes the target cells detected in the detection step. Specifically, the imaging flow cytometer that has detected the target cells acquires the number of target cells, the ratio of the target cells relative to all the cells imaged by the imaging unit and the like.

Note that when the target cell is a vascular endothelial cell (CEC), the localization of NFκB, a protein contained in CEC, in the cell is analyzed in the analysis step. Specifically, in the staining step the CEC is fluorescently labeled via a labeled antibody of CD146 that specifically binds to an antibody expressed in CEC, and NFκB is fluorescently labeled via a labeled antibody that specifically binds to NFκB. In the detection step, fluorescence based on CEC is imaged and fluorescence based on NFκB is imaged. Then, CEC is detected based on the fluorescence image. In the analysis step, it is determined whether the signal molecule NFκB is localized in the nucleus, and the presence or absence of activation of CEC is determined.

When the target cell is CTC derived from lung cancer and the target site is cytokeratin, target cells also are detected based on the amount of cytokeratin existing in the cytoplasm in the detection step. Then, in the analysis step, the number of target cells and the ratio of target cells are acquired.

As described above, at least some non-target cells are removed from the biological sample based on the difference in the forces acting on the target cells and the non-target cells, respectively. In this way no stress is applied to the target cells, and detection of the target cells can be carried out satisfactorily without interference. Since the measurement sample derived from the concentrated target cell-containing sample is supplied to the imaging flow cytometer, it also is possible to properly detect the target cells with a small volume measurement sample. Hence, the time required for detection of target cells can be reduced.

Cell Detection System

The cell detection system 10 for carrying out the steps S1 to S5 in FIG. 1 will be described next.

As shown in FIG. 8, the cell detection system 10 includes a separation device 11, a staining and concentration device 12, and an imaging flow cytometer 13.

The blood concentration of CTC as a target cell is extremely low. Therefore, in order to detect CTC which is a rare cell, the biological sample 21 in the first state, that is, blood, to be provided to the cell detection system 10, is 5 mL or more, and preferably 7.5 mL or more. The separation apparatus 11 performs the separation step of step S1 using the biological sample 21 contained in the container T1 to obtain the target cell-containing sample 22 contained in the container T2. The staining and concentration device 12 performs the staining process of step S2 and the concentration process of step S3 using the target cell-containing sample 22 contained in the container T2 to obtain the measurement sample 23 accommodated in the container T3. The imaging flow cytometer 13 performs the detection step of step S4 and the analysis step of step S5 using the measurement sample 23 accommodated in the container T3.

The containers T1, T2, T3 are treated with a blocking agent. The blocking agent is a poloxamer or 2-methacryloyloxyethyl phosphorylcholine monomer polymer. Since nonspecific adsorption is suppressed when the containers T1, T2, T3 are treated with the blocking agent, target cells adhering to the inner wall of the container that are not supplied for detection can be suppressed. Therefore, it is possible to reliably detect few target cells contained in the biological sample 21, the target cell-containing sample 22, and the measurement sample 23.

Note that although the cell detection system 10 is configured by a plurality of devices, it may be configured by one device. The staining and concentration device 12 also may be configured by a staining device and a concentration device.

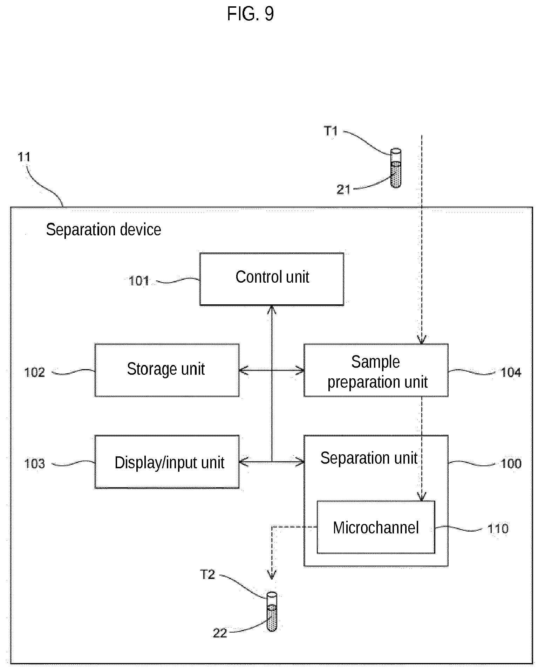

As shown in FIG. 9, the separation device 11 includes a control unit 101, a storage unit 102, a display input unit 103, a sample preparation unit 104, and a separation unit 100.

The control unit 101 is configured by a CPU. The control unit 101 also may be configured by a microcomputer. The control unit 101 performs various processes based on ae program stored in the storage unit 102. The control unit 101 is connected to each unit in the separation device 11, and receives signals from each unit and controls each unit. The storage unit 102 is configured by a RAM, a ROM, a hard disk and the like. The display input unit 103 is configured by a touch panel type display. Note that, instead of the display input unit 103, a display unit composed of a display and an input unit composed of a mouse and a keyboard also may be provided.

The sample preparation unit 104 includes a dispensing unit (not shown), a mixing chamber and the like. As described with reference to FIG. 2, the sample preparation unit 104 acquires the biological sample 21 in the second state by performing sample preparation processing for hemolysis and removal of erythrocytes of the biological sample 21 in the first state. The biological sample 21 in the second state acquired by the sample preparation unit 104 is transferred to the separation unit 100. Note that, in the separation device 11, the sample preparation unit 104 also may be omitted. In this case, the biological sample 21 in the second state is supplied to the separation device 11.

In addition to the microchannel 110, the input end part 120 and the output end part 130 described in FIG. 3A, the separation part 100 is provided with a pump (not shown) for applying a positive pressure to the input end part 120. The separation unit 100 causes the biological sample 21 in the second state to flow to the inlet 121 and the sheath liquid to flow to the inlet 122. At this time, the separation unit 100 adds a positive pressure corresponding to the number of cells to be removed to the inlets 121 and 122 by driving the pump. In this way the velocity of the biological sample 21 flowing through the microchannel 110 is set, and a predetermined number of cells are removed.

Note that the operator can input the number of cells or the cell size acquired by the separation unit 100 via the display input unit 103. Upon receiving the number or the size of the cells to be acquired, the control unit 101 stores the accepted value in the storage unit 102, and the speed of the biological sample 21 flowing through the microchannel 110, that is, the inlets 121 and 122 is set according to the stored value. As described above, the number of cells and the size of cells acquired by the separation unit 100 also can be adjusted by the length, the cross-sectional area, and the cross-sectional shape of the microchannel 110. The operator also may change the number of cells and the size of cells to be acquired by the separation unit 100 by replacing the plate-like member having the microchannel 110, the input end part 120, and the output end part 130 formed thereon.

The separation unit 100 transfers the biological sample 21 that has emerged from the outlet 131 to the container T2 as the target cell-containing sample 22. In this way the target cell-containing sample 22 in the third state is acquired, and the processes of the separation device 11 is completed.

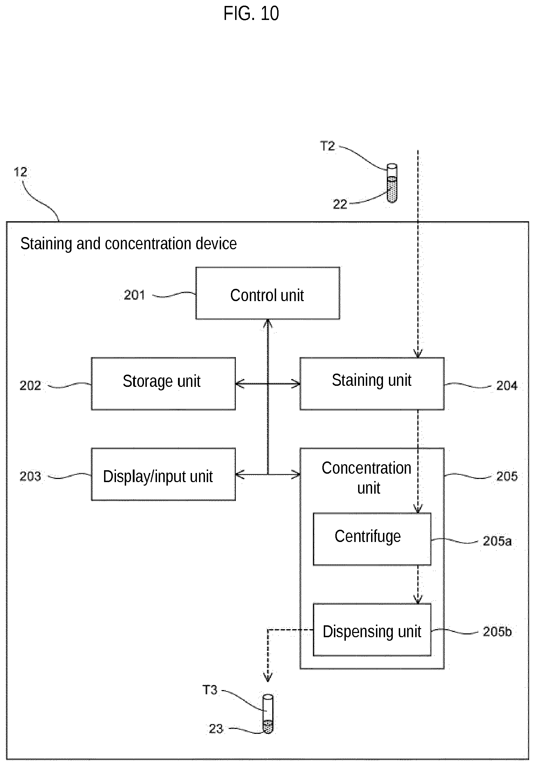

As shown in FIG. 10, the staining and concentration device 12 includes a control unit 201, a storage unit 202, a display input unit 203, a staining unit 204, and a concentration unit 205.
The control unit 201 is configured by a CPU. The control unit 201 may be configured by a microcomputer. The control unit 201 performs various processes based on a program stored in the storage unit 202. The control unit 201 is connected to each unit in the staining and concentration device 12, and receives signals from each unit and controls each unit. The storage unit 202 is configured with a RAM, a ROM, a hard disk and the like. The display input unit 203 is configured by a touch panel type display. Instead of the display input unit 203, a display unit composed of a display and an input unit composed of a mouse and a keyboard may be provided.

The operator inputs the number of cells separately obtained in the separation device 11, that is, the number of cells contained in the target cell-containing sample 22 in the third state, via the display input unit 203. The control unit 201 stores the input cell number in the storage unit 202 and uses it when concentrating the target cell-containing sample 22 after the staining process. Note that the control unit 201 also may receive the number of cells separated and obtained by the separation device 11 from the separation device 11 by communication.

The staining unit 204 includes a dispensing unit and a warming unit (not shown). As described with reference to FIG. 5, the staining unit 204 performs a staining process on the target cell-containing sample 22 in the third state to obtain the target cell-containing sample 22 in the fourth state. The target cell-containing sample 22 in the fourth state acquired by the staining unit 204 is transferred to the concentration unit 205.

The concentration unit 205 includes a centrifugal separator 205a and a dispensing unit 205b. The concentration unit 205 distributes the target cell-containing sample 22 in the fourth state into a predetermined container and centrifugally separates the target cell-containing sample 22 in the fourth state by the centrifugal separator 205a. Then, in the concentration unit 205, the supernatant in the centrifuged container is removed by the dispensing unit 205b. In detail, the control unit 201 reads out the number of cells obtained by the separation device 11 from the storage unit 202, and removes the supernatant via the dispensing unit 205b based on the read number of cells to obtain a predetermined concentration in the container after centrifugation. In this way the target cell-containing sample 22 in the fourth state is concentrated as described in FIG. 6. The concentration of the cells of the measurement sample 23 generated by the concentration unit 205 will be described later.

The concentration unit 205 transfers the target cell-containing sample 22 after the supernatant has been removed to the container T3 as the measurement sample 23. In this way the measurement sample 23 in the fifth state is acquired, and the processing by the staining and concentration device 12 is completed.

Note that the concentration of the cells of the measurement sample 23 generated by the concentration unit 205 is not limited to being automatically set in the staining and concentration device 12, and also may be set by the operator via the display input unit 103.

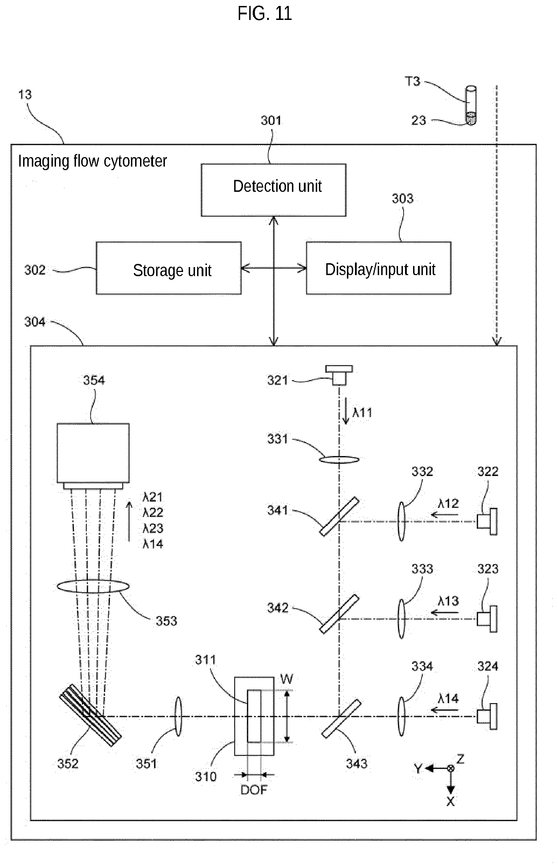

As shown in FIG. 11, the imaging flow cytometer 13 includes a detection unit 301, a storage unit 202, a display input unit 303, and a measurement unit 304. Additionally, the imaging flow cytometer 13 has a suction pipe for suctioning the measurement sample 23 in the container T3, a flow path for transferring the suctioned measurement sample 23 to the flow cell 310, and a flow path for collecting the measurement sample 23 discharged from the flow cell 310.

The detection unit 301 is configured by a CPU. The detection unit 301 may be configured by a microcomputer. The detection unit 301 performs various processes based on a program stored in the storage unit 302. The detection unit 301 is connected to each unit in the imaging flow cytometer 13, and receives signals from each unit and controls each unit. The storage unit 302 is configured with a RAM, a ROM, a hard disk and the like. The display input unit 303 is configured by a touch panel type display. Instead of the display input unit 303, a display unit composed of a display and an input unit composed of a mouse and a keyboard also may be provided.

The measurement unit 304 includes a flow cell 310, light sources 321 to 324, condenser lenses 331 to 334, dichroic mirrors 341 to 343, a condenser lens 351, an optical unit 352, a condenser lens 353, an imaging unit 354. The measurement unit 304 irradiates light on the measurement sample 23 which contains a plurality of kinds of fluorescently labeled target sites to detect plural types of fluorescence having different wavelengths. The measurement unit 304 in FIG. 11 shows XYZ axes orthogonal to each other.

Substantially the entire measurement sample 23 obtained in the staining and concentration device 12 flows in the flow channel 311 of the flow cell 310 in the Z axis positive direction. Here, it is assumed that a small amount of the measurement sample 23 remains in the container T3 and in the flow path from the suction pipe that suctioned the measurement sample 23 in the container T3 to the flow cell 310. Therefore, "substantially the entire amount of the measurement sample 23 obtained in the staining and concentration device 12" means the entire amount excluding the volume not provided to the flow cell 310 that remains in the container T3 and in the flow path from the suction pipe to the flow cell 310. Specifically, 90% (v/v) or more of the measurement sample 23 in the container T3 is supplied to the flow cell 310. In this way it is possible to detect relatively few target cells with almost no surplus when substantially the entire measurement sample 23 is flowed through the flow cell 310.

The light sources 321 to 324 irradiate light on the measurement sample 23 flowing through the flow cell 310. The light sources 321 to 324 are configured by semiconductor laser light sources. The light emitted from the light sources 321 to 324 are laser beams having wavelengths $11\lambda$ to $\lambda14$, respectively. The condenser lenses 331 to 334 collect the light emitted from the light sources 321 to 324, respectively. The dichroic mirror 341 transmits light of wavelength $\lambda11$ and reflects light of wavelength $\lambda12$. The dichroic mirror 342 transmits light of wavelengths $\lambda11$ and $\lambda12$, and reflects light of wavelength $\lambda13$. The dichroic mirror 343 reflects light of wavelengths $\lambda11$ to $\lambda13$, and transmits light of wavelength $\lambda14$. In this way the light of the wavelengths $\lambda11$ to $\lambda14$ is irradiated in the positive direction of the Y axis with respect to the measurement sample 23 flowing through the flow path 311 of the flow cell 310.

Here, the fluorescent stain that labels the nucleus and the two genes respectively is a fluorescent stain that produces fluorescence with wavelength $\lambda21$ when irradiated with excitation light of wavelength $\lambda11$, a fluorescent stain that produces fluorescence with wavelength $\lambda22$ when irradiated with excitation light of wavelength $\lambda12$, and a fluorescent stain which produces fluorescence of wavelength $\lambda23$ when irradiated with excitation light of wavelength $\lambda13$. The images of the fluorescence of wavelengths $\lambda21$ to $\lambda23$ are captured, respectively, so that fluorescence images related to the target nucleus and two genes can be acquired.

When the measurement sample 23 flowing through the flow cell 310 is irradiated with light having wavelengths $\lambda11$ to $\lambda14$, fluorescence is generated from the fluorescent stains that marks the target site of CTC. When the measurement sample 23 flowing through the flow cell 310 is irradiated with light having a wavelength $\lambda14$, this light transmits through the cell. The light having the wavelength $\lambda14$ transmitted through the cell is used for generating a bright field image.

The condensing lens 351 collects the fluorescence of wavelengths $\lambda21$ to $\lambda23$ generated from the measurement sample 23, and the light of wavelength $\lambda14$ transmitted through the measurement sample 23. The optical unit 352 has a configuration in which four dichroic mirrors are combined. The four dichroic mirrors of the optical unit 352 reflect the fluorescence of the wavelengths $\lambda21$ to $\lambda23$ and the light of the wavelength $\lambda14$ at slightly different angles from each other, and separates them on the light receiving surface of the imaging unit 354. The condensing lens 353 collects the fluorescence of the wavelengths $\lambda21$ to $\lambda23$ and the light of the wavelength $\lambda14$.

The imaging unit 354 is configured by a TDI (Time Delay Integration) camera. The imaging unit 354 captures the fluorescence of the wavelengths $\lambda21$ to $\lambda23$ and the light of the wavelength $\lambda14$ to generate the fluorescence images corresponding to the fluorescence of the wavelengths $\lambda21$ to $\lambda23$ and the bright field image corresponding to the light of the wavelength $\lambda14$. The detection unit 301 stores the fluorescence images and the bright-field image generated by the imaging unit 354 in the storage unit 302.

Here, since the imaging unit 354 is configured by a TDI camera, it integrates the fluorescences received on the light receiving surface of the imaging unit 354 to generate fluorescence images and a bright field image. In this way it is possible to improve the quality of the fluorescence images and the bright field image of the cell.

The detection unit 301 performs positive determination as described in FIG. 7, and detects CTC based on the fluorescence images stored in the storage unit 302. Specifically, the detection unit 301 extracts bright spots in a fluorescence image generated from a fluorescent stain that labels the Her2 gene and a fluorescence image that is generated from a fluorescent stain that labels the CEP17. For each cell, the detection unit 301 divides the bright point score based on the Her2 gene by the bright point score based on the CEP17, and determines that the Her2 gene is amplified in that cell when the calculated value is larger than 1. Then, the detection unit 301 detects the positive cells with an amplified Her2 gene as CTC. Then, the detection unit 301 acquires the number of CTCs detected, the ratio of CTC among all the cells imaged by the imaging unit 354 and the like.

Next, the concentration of the measurement sample 23 supplied to the imaging flow cytometer 13 will be described.

As described above, the concentration unit 205 of the staining and concentration device 12 concentrates the target cell-containing sample 22 that was stained by the staining unit 204 to produce a measurement sample 23. At this time, the concentration unit 205 concentrates the target cell-containing sample 22 in the fourth state to prevent the cells from clogging when the measurement sample 23 flows through the flow path system of the imaging flow cytometer 13 to measure the measurement sample 23. The flow path system of the imaging flow cytometer 13 refers to the flow path from the suction pipe used to suction the measurement sample 23 supplied to the imaging flow cytometer 13, through the flow cell 310, to the flow path in which the sample 23 is ultimately collected. In order to prevent the cells of the measurement sample 23 from clogging the flow path system of the imaging flow cytometer 13, the control unit 201 sets the concentration of the cells of the measurement sample 23 to be not more than the upper limit of the concentration suitable for the flow path system. For example, the concentration of the cells of the measurement sample 23 is set to $4.5 \times 10^9$ cells/mL or less.

In this way it is possible to appropriately flow the measurement sample 23 through the flow path system of the imaging flow cytometer 13 by setting the concentration of the cells of the measurement sample 23. Therefore, detection by the imaging flow cytometer 13 can be performed satisfactorily.

Assuming that the flow rate per unit time of the measurement sample 23 flowing through the flow cell 310 is V1, the time for the measurement sample 23 to flow to the flow cell 310, that is, the measurement time, is T, and the volume of the measurement sample 23 flowing through the flow cell 310 is V, then V1, T, and V can be expressed by the following equation (21).

$$V = V1 \times T \ (21)$$

Assuming that the flow velocity of the measurement sample 23 flowing through the flow cell 310, that is, the maximum object moving speed is V2, the maximum imaging region width of the flow cell 310 is W, and the maximum depth of field is DOF, the relationship of V1, V2, W, and DOF can be expressed by the following equation (22). Note that the maximum imaging region width W corresponds to the width of the channel 311 in the X axis direction, and the maximum depth of field DOF corresponds to the width of the channel 311 in the Y axis direction, as shown in FIG. 11. The value of DOF $\times$ W is the core cross-sectional area.

$$V1 = V2 \times DOF \times W \ .... \ (22)$$

Assuming that the number of cells contained in the measurement sample 23 is N and the concentration of the measurement sample 23 is C, the relationship of V, N, and C can be expressed by the following expression (23).

$$C = N/V \ .... \ (23)$$

Based on the above equations (21) to (23), the concentration C can be expressed by the following equation (24).

$$C = N/(V2 \times DOF \times W \times T) \ .... \ (24)$$

In equation (24), the maximum object moving speed V2 is determined by the detection unit 301 by controlling a pump (not shown) and the like for flowing the measurement sample 23 to the flow cell 310. The maximum depth of field DOF and the maximum imaging area width W are determined by the shape of the flow cell 310, the magnification of the lens, the NA of the lens, the size of the light receiving surface of the imaging unit 354 and the like. The measurement time T is determined by the time during which the detection unit 301 performs control to flow the measurement sample 23 to the flow cell 310. The maximum object moving speed V2 and the measuring time T may be set by the operator via the display input unit 303, may be automatically set by the detection unit 301 of the imaging flow cytometer 13, and may be stored beforehand in the storage unit 302.

The control unit 201 of the staining and concentration device 12 determines the concentration of the measurement sample 23 produced based on the number N of cells included in the target cell-containing sample 22of the third state acquired by the separation device 11, and the maximum object moving speed V2 and time measurement T set in the imaging flow cytometer 13. Note that the maximum object moving speed V2 and the measurement time T also may be input to the staining and concentration device 12 by the operator via the display input unit 203, or transmitted from the imaging flow cytometer 13 to the staining and concentration device 12 by communication, or may be stored in the storage unit 202 of the staining and concentration device 12 in advance.

The control unit 201 of the staining and concentration device 12 concentrates the target cell-containing sample 22 of the fourth state by removing the supernatant post centrifugation to obtain a concentration C based on the above formula (24), in other words, to obtain a predetermined volume of measurement sample 23. Since the volume of the concentrated measurement sample 23 at this time corresponds to the volume V of the above formula (21), the predetermined volume of the measurement sample 23 is defined by the measurement time T of the measurement sample 23.

More specifically, the volume V is represented by $V2 \times DOF \times W \times T$ based on the above formulas (21) and (22). That is, the predetermined volume of the measurement sample 23 is a value obtained by multiplying the maximum object moving speed V2, the maximum depth of field DOF, the maximum imaging area width W, and the measurement time T. Hence, the predetermined volume of the measurement sample 23 is set to a value not more than the value of $V2 \times DOF \times W \times T$. When the volume of the measurement sample 23 is defined in this manner, detection can be completed within a predetermined measurement time.

Verification

Verification of the embodiment performed by the inventors will be described next. This verification consists of the following procedures 1 to 4.

1. Preparation of Biological Sample

Cells stained according to the protocol attached to CellHunt Green were designated as CTC. The CTC was added to 7.5 mL of human fresh blood to prepare a biological sample in the first state. Note that in this case CTC is a cell removed from SK-BR3, which is a breast cancer cell line. Although CTC is stained beforehand in this case for the sake of convenience to distinguish it from the cells contained in the original blood, such staining may be omitted when CTC is detected based on a biological sample actually collected from the subject.

2. Separation Step

RBC lysis buffer from CBB was added at a rate of 3 times as much as the biological sample and shaken at room temperature for 10 minutes. Then, the supernatant was removed by centrifugation. By this treatment, erythrocytes are lysed, and the lysed erythrocytes are removed. The cells were resuspended with 4 mL of resuspension buffer from CBB to prepare a biological sample in the second state. A predetermined number of cells were separated and removed by the separation unit 100 shown in FIG. 3A. When the separation and concentration was completed, the volume of the target cell-containing sample in the collection tube was 10 mL. Then, the supernatant was removed by centrifugation. The cells were resuspended with 280 $\mu$L of 0.2% (v/v) Pluronic/PBS to prepare a sample containing target cells in the third state.

3. FISH Staining Step and Concentration Step

A solution containing 2-methacryloyloxyethyl phosphorylcholine monomer polymer was added to a 1.5 mL tube. This reagent corresponds to a blocking agent. The mixture was inverted and then spun down to remove the coating agent. In this way the wall surface of the tube used in the staining process was hydrophilically coated in order to suppress cell absorption loss.

The entire amount of the target cell-containing sample of the third state obtained in the separation step of procedure 2 was transferred to a 1.5 mL tube provided with the adsorption suppressing coating. An ice-cold Carnoy solution, that is, methanol 75% (v/v) / acetic acid 25% (v/v)) was added and suspended sto obtain a final concentration of 30% (v/v). Thereafter, an ice-cold Carnoy solution, that is, methanol 75% (v/v) / acetic acid 25% (v/v) was added and suspended to obtain a final concentration was of 70% (v/v). Thereafter, the supernatant was removed by centrifugation.

As a first wash, 1 mL of 0.2% (v/v) Pluronic/PBS was added and the supernatant was removed by centrifugation. As a second wash, 1 mL of 0.2% (v/v) Pluronic/PBS was added and the supernatant was removed by centrifugation. As a third wash, 1 mL of Ventana's 1$\times$ reaction buffer was added and the supernatant was removed by centrifugation. 100 $\mu$L of 0.2% (v/v) Pluronic/PBS was added and resuspended.

After centrifugation and removal of the supernatant, the Cytocell FISH probe reaction solution from OGT was added according to the attached data of Cytocell FISH probe from OGT. This reaction solution is a reagent for fluorescently labeling a gene at a target site of a cell. Specifically, the Her2 gene is fluorescently labeled with this reaction solution. A thermal denaturation step and a hybridization step were carried out based on the attached data of the Cytocell FISH probe from OTG. 0.4x SSC/0.2% (v/v) Pluronic/PBS was used as a wash. Beforehand, 0.4x SSC/0.2% (v/v) Pluronic/PBS was warmed to 72°C and added and stirred. The supernatant was removed by centrifugation. 2× SSC/0.05% (v/v) Tween 20/0.2% (v/v) Pluronic/PBS was used as a wash. The supernatant was removed by centrifugation. 100 μL of DRAQ 5/0.2% (v/v) Pluronic/PBS was added. This reagent is a reagent for fluorescently labeling the nucleus of the cell. The supernatant was removed by centrifugation. In this way the target cells in the container became stained similar to the fourth state.

200 μL of 0.2% (v/v) Pluronic/PBS was added and suspended. The measurement sample in the fifth state, which has reached the predetermined concentration, was obtained by this treatment.

In procedure 3 as described above, the staining step of step S2 of FIG. 1 and the concentration step of step S3 were performed in parallel. That is, the FISH staining step and the concentration step of procedure 3 are steps including the steps S2 and S3.

4. Detection Step

The measurement sample obtained in procedure 3 was subjected to an imaging flow cytometer. The Ammnis ImageStream was used as the imaging flow cytometer. The measurement amount was set as the entire amount of the input measurement sample. CTC was detected by an imaging flow cytometer based on the obtained image information. The inventors were able to confirm that the target cell CTC can be properly detected according to the above procedures 1 to 4.

Note that although the inventors performed FISH staining in procedure 3 above, immunostaining was also examined as an alternative. In immunostaining, CTC in procedure 1 above was removed from A549 which is a lung cancer cell line. Then, the following procedure 5 was carried out in place of the procedure 3 described above.

5. Immunostaining Step and Concentration Step

A solution containing 1.5 mL 2-methacryloyloxyethyl phosphorylcholine monomer polymer was added to a 5 mL tube. The mixture was inverted and then spun down to remove the coating agent. In this way the wall surface of the tube used in the staining process was hydrophilically coated in order to suppress cell absorption loss.

The entire amount of the target cell-containing sample of the third state obtained in the separation step of procedure 2 was transferred to a 1.5 mL tube provided with the adsorption suppressing coating. The cells were fixed by treatment with a solution containing paraformaldehyde. The cells were washed with 0.2% (v/v) Pluronic/PBS and centrifuged to remove the supernatant. A transmembrane treatment was performed using a solution containing Triton X-100. The supernatant was removed by centrifugation. 1 mL of 0.2% (v/v) Pluronic/PBS was added, the cells washed, and the supernatant was removed by centrifugation. Blocking was carried out by adding 1% (w/v) BSA/0.2% (v/v) Pluronic/PBS. The supernatant was removed by centrifugation.

100 μL of antibody staining solution was added and suspended. Antibody stains include CK Alexa 647, CD45 PE-Cy7 mouse IgG, HOECHST, and Blocking buffer. The antibody staining solution is a reagent for fluorescently labeling a target site of a cell. Specifically, cytokeratin (CK) of CTC is fluorescently labeled, CD45 antigen of the leukocyte is fluorescently labeled, and DNA in the nucleus is fluorescently labeled with an antibody staining solution. The supernatant was removed by centrifugation. 1 mL of 0.2% (v/v) Pluronic/PBS was added as a wash after staining, and the supernatant was removed by centrifugation. In this way the target cells in the container were in a state in which the target cells were stained similar to the fourth state.

200 μL of 0.2% (v/v) Pluronic/PBS was added and suspended. The measurement sample in the fifth state, which has reached the predetermined concentration, was obtained by this treatment.

Also in procedure 5 described above, the staining step of step S2 of FIG. 1 and the concentration step of step S3 were performed in parallel. That is, the immunostaining step and concentration step in procedure 5 are steps including steps S2 and S3.

In the detection step of procedure 4 in this case, the measurement sample obtained in procedure 5 was subjected to an imaging flow cytometer in the same manner as in FISH staining to detect and analyze CTC. In this case, the imaging flow cytometer detected the CTC based on the amount of cytokeratin present in the cell.

When the immunostaining step was performed as described above, the inventors were able to confirm the target cell CTC can be properly detected according to Procedures 1, 2, 5, and 4.

Evaluation of Cell Detection System

The inventors evaluated the cell detection system of the embodiment by comparing the cell recovery ratios between the comparative example and the embodiment. In the comparative example, a CellSearch system manufactured by Veridex was used. In the embodiment, the cell detection system 10 shown in FIG. 8 was used. The cell recovery rates were the values shown in Table 2 below.

Table 2

| Cell line | Comparative Example | Embodiment | | |
|---|---|---|---|---|
| | After microscope detection | After cell separation | After FCM detection | Overall |
| HCC 1569 | 53.1% | 67.5% | 48.6% | 32.8% |
| A549 | 1.0% | 82.3% | 48.6% | 40.0% |

The cell line "HCC 1569" in Table 2, shows the case of using a biological sample to which cancer cells based on a breast cancer cell line have been added to blood. The cell line "A549" shows the case of using a biological sample to which cancer cells based on a lung cancer cell line have been added to blood. The number of cancer cells contained in the biological sample of the comparative example was the same as the number of cancer cells contained in the biological sample of the embodiment.

In the comparative example, cancer cells were collected using magnetic particles with immobilized anti-EpCAM antibody, using the cell adhesion factor (EpCAM) expressed in cancer cells as a target, and the recovered cancer cells were examined by fluorescence microscopy. In the embodiment, the processes of steps S1 to S4 in FIG. 1 were performed. In the embodiment, in the case of the cell line "HCC 1569", the Her2 gene was fluorescently labeled and cancer cells were detected based on amplification of the Her2 gene. In the case of cell line "A549", cytokeratin was fluorescently labeled and cancer cells were detected based on the amount of cytokeratin present.

The cell recovery rate shown in the "after microscope detection" column in the comparative example also is a value obtained by dividing "the number of cancer cells detected by a microscope in CellSearch" by "the number of cancer cells contained in a biological sample". The cell recovery rate shown in the column "after cell separation" in the embodiment is a value obtained by dividing "the number of cancer cells collected after the separation step" by "the number of cancer cells contained in the biological sample". The cell recovery rate shown in the "after FCM detection" column in the embodiment is defined as a value obtained after "the number of cancer cells detected in the detection step similar to the embodiment in the imaging flow cytometer" is subtracted from "the number of cancer cells contained in target cell-containing sample". The cell recovery rate shown in the "overall" column of the embodiment is a value obtained by multiplying "the cell collection rate shown in the column after the cell separation" by "the cell collection rate shown in the column after the FCM detection".

In the case of the cell line "A549", in the comparative example the number of cancer cells detected was extremely small, 1.0% of the number of cancer cells contained in the biological sample. This is because the expression level of EpCAM is small in lung cancer cells. On the other hand, in the embodiment the number of cancer cells detected is approximately 40.0% of the number of cancer cells contained in the biological sample, which is remarkably larger than that of the comparative example. According to the embodiment as described above, even cancer cells having a small amount of expression of EpCAM can be reliably detected as compared with the comparative example.

In the case of the cell line "HCC 1569", in the comparative example the number of cancer cells detected is relatively high, 53.1% of the number of cancer cells contained in the biological sample. On the other hand, in the embodiment the number of cancer cells detected is about 32.8% of the number of cancer cells contained in the biological sample, which is slightly smaller than that of the comparative example. However, since the difference between the embodiment and the comparative example is only about 20.3% smaller, it can be said that detection of cancer cells based on the cell line "HCC 1569" is sufficiently possible also according to the embodiment.

The cell recovery rate of the cell line "A549" and the cell collection rate of the cell line "HCC 1569" are as large as 52.1% in the column of "after microscope detection" in the comparative example, and in the case of the "overall" column it is remarkably small, on the order of 7.2%. Therefore, according to the embodiment, it can be said that the number of cancer cells can be stably detected even when the types of cancer cells are different.

Modifications

In the above embodiment, the separation step of step S1 was performed without staining the target cells, but the order of staining is not limited thereto.

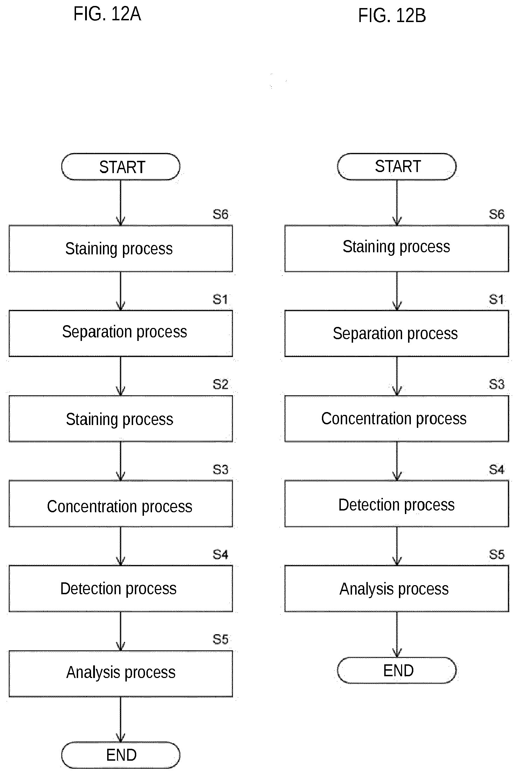

In the case of the modification shown in FIG. 12A, the staining step of step S6 is added before the separation step of step S1, as compared with each step of FIG. 1. In this modification, for example, the nucleus of the target cell is stained in the staining step of step S6, and the gene is stained in the staining step of step S2. Generally, reagents that stain genes are more expensive than reagents that stain nuclei. Therefore, it is preferable that the gene is stained after the separation step, and consumption of a reagent for staining the gene is suppressed.

In the case of the modification shown in FIG. 12B, the staining step of step S2 is omitted as compared with each step of FIG. 12A. In this modification, all staining is done in step S6 prior to the separation step. In this case, although the consumption of the reagent increases, for example, the washing performed in the staining step of step S6 for staining the target cells, and the washing performed in the separation step in step S1 of obtaining the target cell-containing sample are performed at once after the separation step. In this way the time required for detection of target cells can be reduced.

EXPLANATION OF THE REFERENCE NUMERALS

    10 Cell detection system
    13 Imaging flow cytometer
    21 Biological sample
    22 Target cell-containing sample
    23 Measurement sample
    100 Separation unit
    110 microchannel
    111 Curved part
    205 Concentration unit
    301 Detection unit
    310 Flow cell
    354 Imaging unit
    T1, T2, T3 Container

**Claims**

1.  A cell detection method comprising:

    step of obtaining a sample containing target cells by removing at least a part of the non-target cells from a biological sample including target cells and non-target cells based on the difference in the forces acting on the target cells and the non-target cells, respectively;
    step of obtaining a measurement sample that has a concentration of the target cells increased from the sample containing target cells; and
    step of detecting the target cells by subjecting the measurement sample to an imaging flow cytometer.

2.  The cell detection method according to claim 1, wherein
    the difference in forces acting on the target cells and the non-target cells is caused by a difference in the form between the target cells and the non-target cells.

3.  The cell detection method according to claim 2, wherein
    the form is cell size.

4.  The cell detection method according to any one of claims 1 to 3, wherein
    in the step of obtaining the target cell-containing sample, the target cells and the non-target cells are separated without staining the target cells.

5.  The cell detection method according to any one of claims 1 to 3, wherein
    the target cells are stained before the step of obtaining the sample containing target cells.

6.  The cell detection method according to any one of claims 1 to 3, wherein
    the target cells are stained before the step of obtaining the sample containing target cells and after the step of obtaining the sample containing target cells.

7.  The cell detection method according to any one of claims 1 to 6, wherein
    in the step of obtaining the sample containing target cells, the target cells and the non-target cells are separated by flowing the biological sample through a micro flow channel.

8. The method according to any one of claims 1 to 7, wherein
in the step of obtaining the sample containing target cells, the target cells and the non-target cells are separated by flowing the biological sample into a flow channel having a curved part.

9. The method according to any one of claims 1 to 8, wherein
in the step of obtaining the sample containing target cells, the target cells and the non-target cells are separated based on a velocity distribution occurring in a channel through which the biological sample flows.

10. The cell detection method according to any one of claims 1 to 9, wherein
in the step of obtaining the measurement sample, the sample containing target cells is concentrated.

11. The cell detection method according to claim 10, wherein
the concentration of cells contained in the measurement sample is set to $4.5 \times 10^9$ cells/mL or less.

12. The cell detection method according to any one of claims 1 to 11, wherein
in the step of obtaining the measurement sample, the sample containing target cells is concentrated so that the measurement sample has a predetermined volume.

13. The cell detection method according to claim 12, wherein
the predetermined volume is a volume defined by the measurement time of the measurement sample in the step of detecting the target cells.

14. The cell detection method according to claim 13, wherein
the predetermined volume is a volume equal to or less than a value obtained by multiplying a maximum object movement speed, a maximum depth of field, a maximum imaging area width, and the measurement time of the imaging flow cytometer.

15. A cell detection system comprising:

a separation unit for obtaining a sample containing target cells by removing at least a part of the non-target cells from a biological sample containing the target cells and the non-target cells based on the forces acting on each of the target cells and the non-target cells;
a concentration unit for obtaining a measurement sample having a concentration of the target cells increased from the sample containing target cells;
an imaging unit for imaging the target cells contained in the measurement sample flowing through the flow cell; and
a detection unit configured to detect the target cells based on the captured image acquired by the imaging unit.

FIG. 1

```
              ┌─────────────┐
              │    START    │
              └──────┬──────┘
                     │           S1
              ┌──────▼───────────────┐
              │  Separation process  │
              └──────┬───────────────┘
                     │           S2
              ┌──────▼───────────────┐
              │   Staining process   │
              └──────┬───────────────┘
                     │           S3
              ┌──────▼───────────────┐
              │ Concentration process│
              └──────┬───────────────┘
                     │           S4
              ┌──────▼───────────────┐
              │  Detection process   │
              └──────┬───────────────┘
                     │           S5
              ┌──────▼───────────────┐
              │   Analysis process   │
              └──────┬───────────────┘
                     │
              ┌──────▼──────┐
              │     END     │
              └─────────────┘
```

## FIG. 2

Separation Process

1st state

Biological sample (blood)

Non-target cell (erythrocyte)

Non-target cell (platelet)

Target cell (CTC)

Non-target cell (leukocyte)

Lysing erythrocytes

2nd state

Biological sample (blood)

Non-target cell (erythrocyte)

Non-target cell (platelet)

Target cell (CTC)

Non-target cell (leukocyte)

Separation of non-target cells

3rd state

Target cell-containing sample)

Target cell (CTC)

Non-target cell (Leukocyte)

FIG. 3A

FIG. 3B

FIG. 4A

FIG. 4B

CD45+cell number                                    Cancer cell number

Cell size (μm)

FIG. 5

Staining process

3<sup>rd</sup> state

Target cell-containing sample

Target cell (CTC)

Non-target cells (leukocyte)

Nucleus

CEP17     Her2 gene

Staining

4<sup>th</sup> state

Target cell-containing sample

Target cell (CTC)

Non-target cells (leukocyte)

Nucleus

CEP17     Her2 gene

FIG. 6

Concentration process

$4^{th}$ state

Target cell-containing sample

Target cell (CTC)

Non-target cells (leukocyte)

Concentration

Centrifugation

Supernatant removal

$5^{th}$ state

Target cell (CTC)

Non-target cells (leukocyte)

FIG. 7

Detection process

5<sup>th</sup> state

Measurement sample

Target cell (CTC)　　　　　　　　　　Non-target cell (leukocyte)

Imaging

Fluorescence image

Positive CTC detection

FIG. 8

FIG. 9

FIG. 10

FIG. 11

FIG. 12A                    FIG. 12B

START                       START

S6                          S6
Staining process            Staining process

S1                          S1
Separation process          Separation process

S2                          S3
Staining process            Concentration process

S3                          S4
Concentration process       Detection process

S4                          S5
Detection process           Analysis process

S5
Analysis process            END

END

Europäisches
Patentamt

European
Patent Office

Office européen
des brevets

# EUROPEAN SEARCH REPORT

Application Number

EP 18 20 3353

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/293010 A1 (NAGRATH SUNITHA [US] ET AL) 15 October 2015 (2015-10-15) * paragraphs [0002], [0004], [0062], [0065], [0106]; figures 2,3 * | 1-15 | INV. G01N15/14 B01L3/00 G01N15/02 G01N15/10 |
| X | US 3 675 768 A (LEGORRETA-SANCHEZ GILDARDO) 11 July 1972 (1972-07-11) | 1-6, 10-15 | |
| A | * column 1, line 7 - line 10 * * column 2, line 26 - line 36 * * column 4, line 50 - line 55 * * column 6, line 37 - column 7, line 40; figure 1 * | 7-9 | |
| A | WO 2017/003380 A1 (UNIV NANYANG TECH [SG]) 5 January 2017 (2017-01-05) * paragraphs [0032], [0048], [0049], [0067]; figures 1,17 * | 1-15 | |
| A | US 2016/303565 A1 (BHAGAT ALI ASGAR [SG] ET AL) 20 October 2016 (2016-10-20) * paragraph [0031] - paragraph [0032]; figures 1a, 1b * | 1-15 | TECHNICAL FIELDS SEARCHED (IPC)

G01N B01L |
| A | US 2012/142679 A1 (BROLIO MAURICE [FR] ET AL) 7 June 2012 (2012-06-07) * paragraph [0765] * | 1,15 | |

The present search report has been drawn up for all claims

| Place of search | Date of completion of the search | Examiner |
|---|---|---|
| The Hague | 20 March 2019 | Eidmann, Gunnar |

## ANNEX TO THE EUROPEAN SEARCH REPORT
## ON EUROPEAN PATENT APPLICATION NO.

EP 18 20 3353

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2019

| Patent document cited in search report | Publication date | Patent family member(s) | | Publication date |
|---|---|---|---|---|
| US 2015293010 A1 | 15-10-2015 | US | 2015293010 A1 | 15-10-2015 |
| | | US | 2019017919 A1 | 17-01-2019 |
| | | WO | 2014070776 A1 | 08-05-2014 |
| US 3675768 A | 11-07-1972 | NONE | | |
| WO 2017003380 A1 | 05-01-2017 | JP | 2018523118 A | 16-08-2018 |
| | | US | 2018185846 A1 | 05-07-2018 |
| | | WO | 2017003380 A1 | 05-01-2017 |
| US 2016303565 A1 | 20-10-2016 | AU | 2013403343 A1 | 19-05-2016 |
| | | CN | 105683750 A | 15-06-2016 |
| | | EP | 3058365 A1 | 24-08-2016 |
| | | JP | 6314220 B2 | 18-04-2018 |
| | | JP | 2017500006 A | 05-01-2017 |
| | | KR | 20160075568 A | 29-06-2016 |
| | | RU | 2016118626 A | 21-11-2017 |
| | | SG | 11201602779T A | 30-05-2016 |
| | | US | 2016303565 A1 | 20-10-2016 |
| | | WO | 2015057159 A1 | 23-04-2015 |
| US 2012142679 A1 | 07-06-2012 | AR | 077446 A1 | 31-08-2011 |
| | | AU | 2010267814 A1 | 16-02-2012 |
| | | BR | PI1015949 A2 | 26-04-2016 |
| | | CA | 2767051 A1 | 06-01-2011 |
| | | CN | 102482285 A | 30-05-2012 |
| | | CY | 1119442 T1 | 07-03-2018 |
| | | DK | 2448939 T3 | 19-06-2017 |
| | | EP | 2448939 A1 | 09-05-2012 |
| | | ES | 2627428 T3 | 28-07-2017 |
| | | HR | P20170827 T1 | 25-08-2017 |
| | | HU | E034503 T2 | 28-02-2018 |
| | | IL | 217294 A | 30-07-2015 |
| | | JP | 5663571 B2 | 04-02-2015 |
| | | JP | 2012531462 A | 10-12-2012 |
| | | KR | 20120103552 A | 19-09-2012 |
| | | LT | 2448939 T | 12-06-2017 |
| | | PL | 2448939 T3 | 31-08-2017 |
| | | PT | 2448939 T | 12-06-2017 |
| | | RU | 2012103460 A | 10-08-2013 |
| | | SG | 177421 A1 | 28-02-2012 |
| | | SG | 10201403138W A | 28-08-2014 |
| | | TW | 201105672 A | 16-02-2011 |
| | | US | 2012142679 A1 | 07-06-2012 |
| | | UY | 32753 A | 31-01-2011 |
| | | WO | 2011001112 A1 | 06-01-2011 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 18 20 3353

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2019

| Patent document cited in search report | Publication date | Patent family member(s) | Publication date |
|---|---|---|---|
| ------------------------------------------------------------------------------- | | | |

For more details about this annex : see Official Journal of the European Patent Office, No. 12/82

EPO FORM P0459

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 8885913 B

**Non-patent literature cited in the description**

• *CELLSEARCH System Overview |CELLSEARCH,* 26 October 2017, https://www.cellsearch-ctc.com/product-systems-overview/cellsearch-system-overview

• *CELLSEARCH System Overview | CELLSEARCH,* 26 October 2017, https://www.cellsearch-ctc.com/product-systems-overview/cellsearch-system-overview